# EUROPEAN PATENT APPLICATION

(11) **EP 4 138 510 A1**
(43) Date of publication of application: **22.02.2023**
(21) Application number: 21804142.4
(22) Date of filing: 14.05.2021
(51) Int. Cl.: H04W 76/20, H04W 76/18, H04W 76/15, H04W 36/00

(54) **METHOD AND APPARATUS FOR PERFORMING CONDITIONAL PSCELL CHANGE PROCEDURE IN NEXT-GENERATION MOBILE COMMUNICATION SYSTEM**

(30) Priority: 15.05.2020 KR 20200058290
(71) Applicant: Samsung Electronics Co., Ltd., Gyeonggi-do 16677 (KR)
(72) Inventor: JUNG, Sangyeob, Suwon-si, Gyeonggi-do 16677 (KR); KIM, Soenghun, Suwon-si, Gyeonggi-do 16677 (KR)
(74) Representative: Gulde & Partner
(86) International application number: PCT/KR2021/006087
(87) International publication number: WO 2021/230713

(57) **Abstract**

The present disclosure relates to a communication technique for combining an IoT technology with a 5G communication system for supporting a higher data transmission rate than that of a beyond-4G system, and a system therefor. The present disclosure may be applied to intelligent services (for example, smart homes, smart buildings, smart cities, smart cars or connected cars, health care, digital education, retail businesses, security and safety related services, and the like) on the basis of 5G communication technologies and IoT-related technologies.

## Description

### [Technical Field]

The present disclosure relates to operations of a terminal and a base station in a mobile communication system, and more particularly, to a method and apparatus for performing a conditional PSCell change process.

### [Background Art]

Efforts have been made to develop an improved 5G communication system or a pre-5G communication system in order to meet the demand for wireless data traffic having increased since the deployment of 4G communication systems. Therefore, the 5G or pre-5G communication system is called a Beyond 4G Network or a Post long term evolution (LTE) system. The 5G communication system is considered to be implemented in extremely high frequency (mmWave) bands (e.g., 60 GHz band) so as to accomplish higher data rates. To decrease the propagation loss of radio waves and increase the transmission distance of radio waves in the extremely high frequency bands, beamforming, massive multiple-input multiple-output (massive MIMO), full dimensional MIMO (FD-MIMO), array antenna, analog beamforming, large scale antenna techniques, and the like have been discussed in the 5G communication system. In addition, in the 5G communication system, development for system network improvement is under way based on an evolved small cell, an advanced small cell, a cloud radio access network (cloud RAN), an ultra-dense network, device-to-device (D2D) communication, wireless backhaul, a moving network, cooperative communication, coordinated multi-point (CoMP), interference cancellation, and the like. In addition, in the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Meanwhile, the Internet, which is a human-centered connectivity network where humans generate and consume information, is now evolving to the Internet of Things (IoT) where distributed entities, such as things, exchange and process information. The Internet of Everything (IoE), which is a combination of the IoT technology and the Big data processing technology through connection with a cloud server, has emerged. As technology elements, such as sensing technology, wired/wireless communication and network infrastructure, service interface technology, and security technology have been demanded for IoT implementation, technologies such as a sensor network, Machine-to-Machine (M2M) communication, and Machine Type Communication (MTC) for connection between things have been recently researched. Such an IoT environment may provide intelligent Internet technology (IT) services that create a new value to human life by collecting and analyzing the data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, the 5G communication technologies such as a sensor network, Machine-to-Machine (M2M) communication, and Machine Type Communication (MTC) may be implemented by beamforming, MIMO, and array antenna techniques. Application of a cloud radio access network (RAN) as the above-described big data processing technology may also be considered to be as an example of convergence between the 5G technology and the IoT technology.

### [Disclosure of Invention]

### [Technical Problem]

In case that a terminal receives a RRC connection reconfiguration message, a RRC reconfiguration complete message is transmitted before a conditional PSCell change is configured. Thus, the procedure for performing the conditional PSCell change is insufficient.

### [Solution to Problem]

In order to solve the above problems, in the present invention, in case that a terminal receives a control message for configuring conditional reconfiguration and the received conditional reconfiguration field is a conditional PSCell change, the terminal may continue the conditional configuration evaluation. In addition, in case that it is determined that the conditional configuration evaluation condition is fulfilled, the terminal performs the conditional PSCell change and then transmits an RRC reconfiguration complete message (RRCReconfigurationComplete).

### [Advantageous Effects of Invention]

According to the method and apparatus for performing a conditional PSCell change process proposed in the present invention, the conditional PSCell change process may be performed in an appropriate manner.

### [Brief Description of Drawings]

FIG. 1 is a diagram illustrating a structure of an LTE system according to an embodiment of the present invention.
FIG. 2 is a diagram illustrating a radio protocol structure in an LTE system according to an embodiment of the present invention.
FIG. 3 is a diagram illustrating a structure of a next-generation mobile communication system according to an embodiment of the present invention.
FIG. 4 is a diagram illustrating a radio protocol structure in a next-generation mobile communication system according to an embodiment of the present invention.
FIG. 5 is a diagram illustrating an overall flowchart ofa case in which a (NG)EN-DC configured LTE performs intra-SN PSCell change according to an embodiment of the present invention.
FIG. 6 is a diagram illustrating an overall flowchart for a case in which a (NG)EN-DC configured LTE performs Conditional intra-SN PSCell change according to an embodiment of the present invention.
FIG. 7 is a diagram illustrating an overall flowchart of a case in which an NR-DC configured LTE performs intra-SN PSCell change according to an embodiment of the present invention.
FIG. 8 is a diagram illustrating an overall flowchart of a case in which a NR-DC configured UE performs conditional intra-SN PSCell change according to an embodiment of the present invention.
FIG. 9 is a flowchart illustrating terminal operation when a DC configured terminal performs conditional handover.
FIG. 10 is a block diagram illustrating an internal structure of a terminal to which the present invention is applied.
FIG. 11 is a block diagram illustrating a structure of a base station according to an embodiment of the present invention.

### [Mode for the Invention]

Hereinafter, embodiments of the present invention will be described in detail with reference to the accompanying drawings.

In describing embodiments, descriptions of technical contents that are well known in the technical field to which the present invention pertains and are not directly related to the present invention will be omitted. This is to more clearly convey the gist of the present invention by omitting unnecessary description.

For the same reason, in the accompanying drawings, some components are enlarged, omitted, or depicted schematically. Furthermore, the size of each component does not accurately reflect its real size. In the drawings, the same or similar components are assigned the same reference numerals.

The merits and characteristics of the present invention and a method for achieving the merits and characteristics will become more apparent from the embodiments described in detail in conjunction with the accompanying drawings. However, the present invention is not limited to the disclosed embodiments, but may be implemented in various different ways. The embodiments of the present disclosure are provided to only complete the present disclosure and to allow those skilled in the art to understand the category of the present invention. The present disclosure is defined by the category of the claims. The same reference numerals will be used to refer to the same or similar components throughout the drawings.

In this case, it will be understood that each block of the flowchart illustrations and combinations of the flowchart illustrations can be executed by computer program instructions. These computer program instructions may be mounted on the processor of a general purpose computer, a special purpose computer, or other programmable data processing apparatus, so that the instructions executed by the processor of the computer or other programmable data processing apparatus create means for executing the functions specified in the flowchart block(s). These computer program instructions may also be stored in computer-usable or computer-readable memory that can direct a computer or other programmable data processing equipment to function in a particular manner, so that the instructions stored in the computer-usable or computer-readable memory produce an article of manufacture including instruction means that implement the function specified in the flowchart block(s). The computer program instructions may also be loaded into a computer or other programmable data processing apparatus to cause a series of operational steps performed on the computer or other programmable data processing apparatus to produce a computer-executed process, so that the instructions performing the computer or other programmable data processing apparatus provide the steps for executing the functions described in the flowchart block(s).

Furthermore, each block may represent a portion of a module, a segment, or code, which includes one or more executable instructions for implementing a specified logical function(s). It should also be noted that in some alternative implementations, the functions noted in the blocks may occur out of order. For example, two blocks shown in succession may in fact be executed substantially concurrently, or the blocks may sometimes be executed in the reverse order, depending upon the functionality involved.

In this case, the term "unit", as used in the present embodiment means software or a hardware component, such as a field programmable gate array (FPGA) or an application-specific integrated circuit (ASIC), and the "unit" performs specific tasks. However, the 'unit' is not limited to software or hardware. The "unit" may be constituted to reside on an addressable storage medium and constituted to operate on one or more processors. Accordingly, according to some embodiments, the "unit" may include components such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." Furthermore, the components and "units" may be implemented to operate one or more CPUs within a device or a security multimedia card. Also, according to some embodiments, the 'unit' may include one or more processors. In the following description, the terms for identifying access nodes, and the terms indicating network entities, messages, interfaces between network entities, and various identification information and the like information items are exemplified for convenience of explanation of the disclosure. Accordingly, the terms used in the following description are not limited to specific meanings and they may be replaced by other terms that are equivalent in technical meaning.

For the convenience of explanation, in the present invention, terms and names defined in the 3rd generation partnership project long-term evolution (3GPP LTE) standard will be used. However, the present invention is not limited to the above-mentioned terms and names, and the present invention may be equally applied to systems conforming to other standards.

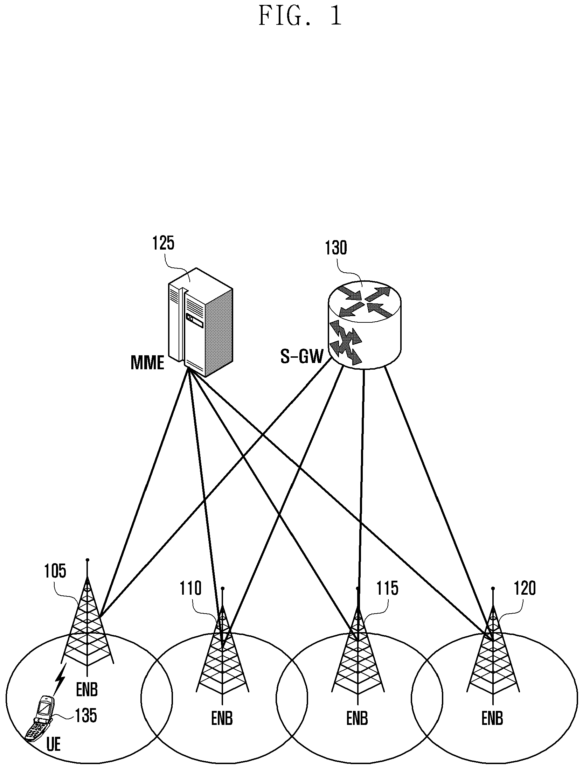

FIG. 1 is a structure of an LTE system according to an embodiment of the present invention. With reference to FIG. 1, a wireless access network of an LTE system includes evolved Nodes B (hereinafter eNBs, Nodes B, or base stations) 105, 110, 115, 120, a mobility management entity (MME) 125, and a serving gateway (S-GW) 130, as illustrated. A user equipment (hereinafter UE or terminal) 135 connects to an external network through the eNBs 105 through 120 and the S-GW 130.

In FIG. 1, the eNBs 105 through 120 correspond to an existing Node B in a UMTS system. The eNBs are connected with the UE 135 through a radio channel and play more complicated roles than the existing Node B. In the LTE system, every user traffic as well as a real-time service such as Voice over Internet Protocol (VoIP) is provided through a shared channel, requiring a device for collecting state information of UEs, such as a buffer state, an available transmit power state, a channel state, etc., and performing scheduling based on the state information. One eNB generally controls multiple cells. For instance, to implement a transmission speed of 100 Mbps, the LTE system may use, for example, orthogonal frequency division multiplexing (hereinafter OFDM) as a wireless connection scheme in a bandwidth of 20 MHz. Also, adaptive modulation & coding (hereinafter AMC) is used in which a modulation scheme and a channel coding rate are determined depending on a channel state of a UE. The S-GW 130 is a device for providing a data bearer, and generates or removes the data bearer under control of the MME 125. The MME 125 is in charge of various control functions as well as a mobility management function for the LTE, and is connected with the plurality of base stations.

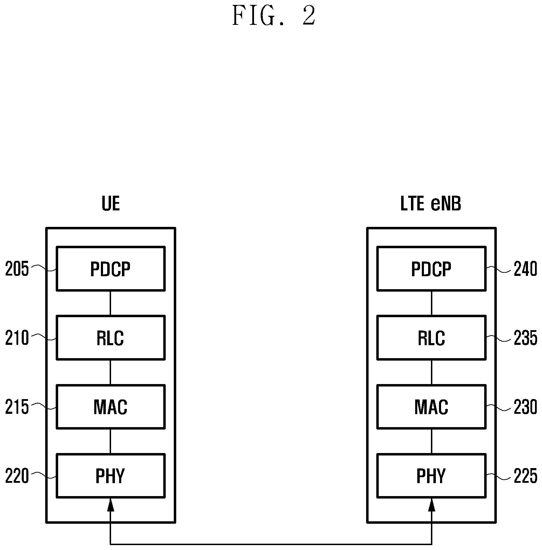

FIG. 2 is a diagram illustrating a radio protocol structure in an LTE system according to an embodiment of the present invention.

With reference to FIG. 2, the LTE and the eNB include a packet data convergence protocol (PDCP) 205, 240, a radio link control (RLC) 210, 235, a medium access controls (MAC) 215, 230, respectively, in the radio protocol of the LTE system. The PDCP 205, 240 performs an operation such as compressing and decompressing an IP header. Main functions of the PDCP are described below.
- Header compression and decompression function (Header compression and decompression: ROHC only)
- User data transmission function (Transfer of user data)
- Sequential delivery function (in-sequence delivery of upper layer packet data units (PDUs) at PDCP re-establishment procedure for RLC acknowledge mode (AM))
- Reordering function (For split bearers in DC (only support for RLC AM): PDCP PDU routing for transmission and PDCP PDU reordering for reception)
- Duplicate detection function (duplicate detection of lower layer SDUs at PDCP re-establishment procedure for RLC AM)
- Retransmission function (Retransmission of PDCP SDUs at handover and, for split bearers in DC, of PDCP PDUs at PDCP data-recovery procedure, for RLC AM)
- Ciphering and deciphering function (Ciphering and deciphering)
- Timer-based SDU removal function (Timer-based SDU discard in uplink)

The radio link control (hereinafter RLC) 210, 235 reconstitutes the PDCP packet data unit (PDU) to be a proper size and performs an automatic repeat request (ARQ) function. Main functions of the RLC are described below.
- Data transmission function (Transfer of upper layer PDUs)
- ARQ function (Error Correction through ARQ (only for AM data transfer))
- Concatenation, segmentation, and reassembly function (concatenation, segmentation, and reassembly of RLC SDUs (only for UM and AM data transfer))
- Re-segmentation function (Re-segmentation of RLC data PDUs (only for AM data transfer))
- Reordering function (Reordering of RLC data PDUs (only for UM and AM data transfer)
- Duplication detection function (Duplicate detection (only for UM and AM data transfer))
- Error detection function (Protocol error detection (only for AM data transfer))
- RLC SDU deletion function (RLC SDU discard (only for UM and AM data transfer))
- RLC re-establishment function (RLC re-establishment)

The MAC 215, 230 is connected with various RLC layer devices constituted in one UE, and perform a multiplexing of RLC PDUs to MAC PDU and a demultiplexing of the RLC PDUs from the MAC PDU. Main functions of the MAC are described below.
- Mapping function (Mapping between logical channels and transport channels)
- Multiplexing and demultiplexing function (multiplexing/demultiplexing of MAC SDUs belonging to one or different logical channels into/from transport blocks (TB) delivered to/from the physical layer on transport channels)
- Scheduling information report function (scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The physical layer 220, 225 performs an operation of channel-coding and modulating higher layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer. In addition, the physical layer also uses a hybrid ARQ (HARQ) for additional error correction, and a receiving end transmits one bit so as to indicate whether or not a packet transmitted by a transmitting end has been received. This is referred to as HARQ ACK/NACK information. Downlink HARQ ACK/NACK information regarding uplink transmission may be transmitted through a physical channel of a physical hybrid-ARQ indicator channel (PHCIH), and uplink HARQ ACK/NACK information regarding downlink transmission may be transmitted through a physical channel of a physical uplink control channel (PUCCH) or a physical uplink shared channel (PUSCH).

Meanwhile, the PHY layer may include one or multiple frequencies/carriers, and a technology for simultaneously configuring and using multiple frequencies is referred to as carrier aggregation (hereinafter CA). The CA technology refers to a technology that additionally uses a primary carrier and one or multiple secondary carriers for communications between a terminal (or a user equipment, or a LTE) and a base station (an E-UTRAN NodeB or eNB) instead of using one carrier for the communication between the terminal and the base station such that the amount of transmission can be substantially increased by the number of secondary carriers. Meanwhile, in the LTE, a cell within a base station which uses the primary carrier is referred to as a primary cell (PCell), and a secondary carrier is referred to as a secondary cell (SCell). Although not illustrated in the drawing, a radio resource control (hereinafter RRC) layer exists above the PDCP layer of each of the UE and the base station, and the RRC layer may exchange configuration control messages related to access and measurement for the sake of radio resource control.

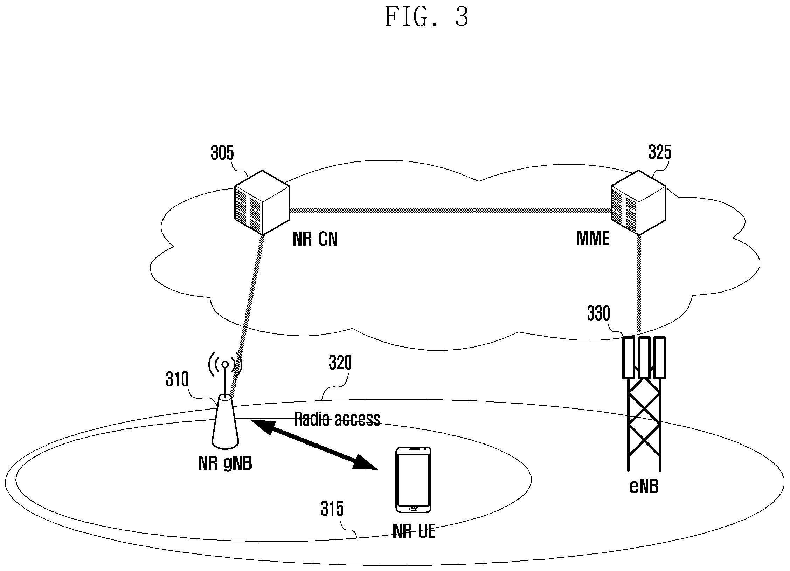

FIG. 3 is a diagram illustrating a structure of a next-generation mobile communication system according to an embodiment of the present invention.

With reference to FIG. 3, a radio access network of a next-generation mobile communication system includes a new radio Node B (hereinafter NR NB) 310 and a new radio core network (NR CN, or next generation core network (NG CN)) 305, as illustrated. A new radio user equipment (hereinafter NR UE or terminal) 315 accesses an external network through the NR NB 310 and the NR CN 305.

In FIG. 3, the NR NB 310 corresponds to an evolved Node B (eNB) of an existing LTE system. The NR NB is connected to the NR LTE 315 through a radio channel, and is capable of providing a better service than the existing node B. In the next-generation mobile communication system, all user traffics are provided through a shared channel, and there is accordingly a need for a device for aggregating and scheduling status information such as the buffer status of UEs, the available transmission power status, and the channel status, and the same is handled by the NR NB 310. A single NR NB normally controls multiple cells. In order to implement super-high data transmission compared with the existing LTE, the next-generation mobile communication system may have at least the existing maximum bandwidth, and a beamforming technology may be additionally combined, based on orthogonal frequency division multiplexing (hereinafter OFDM) as a radio access technology. In addition, an adaptive modulation & coding (hereinafter AMC) scheme is applied, which determines the modulation scheme and the channel coding rate according to the channel status of the LTE. The NR CN 305 performs functions such as mobility support, bearer configuration, and QoS configuration. The NR CN is a device in charge of not only the LTE mobility management function, but also various control functions, and is connected to multiple base stations. In addition, the next-generation mobile communication system may interwork with the existing LTE system, and the NR CN is connected to an MME 325 through a network interface. The MME is connected to an eNB 330, which is an existing base station.

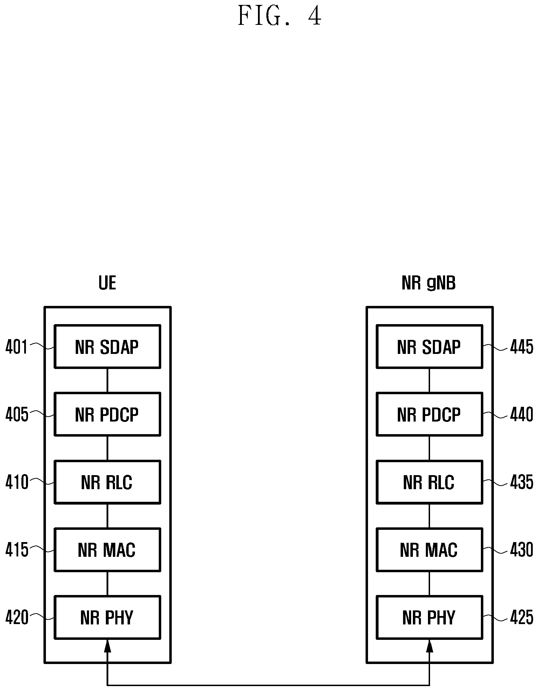

FIG. 4 is a diagram illustrating a radio protocol structure in a next-generation mobile communication system according to an embodiment of the present invention.

With reference to FIG. 4, a UE and a NR base station include a NR SDAP 401, 445, aNRPDCP 405, 550, a NR RLC 410, 435, and a NR MAC 415, 430, respectively, in a radio protocol of a next-generation mobile communication system.

Major functions of the NR SDAP 401, 445 may include some of the following functions:
- User data transmission function (transfer of user-plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

With respect to the SDAP layer device, the LTE may receive a configuration as to whether to use a header of the SDAP layer device or a function of the SDAP layer device for each PDCP layer device, each bearer, or each logical channel through an RRC message. In case that the SDAP header is configured, a one-bit NAS reflective QoS indicator of the SDAP header and a one-bit AS reflective QoS indicator may indicate that the UE updates or reconfigures information on mapping of QoS flow and a data bearer in uplink and downlink. The SDAP header may include QoS flow ID information indicating the QoS. The QoS information may be used as data-processing-priority, scheduling information, etc. to support a seamless service.

The main functions of the NR PDCP 405, 440 may include some of the following functions.
- Header compression and decompression function (Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

The reordering function of the NR PDCP device is a function of sequentially reordering PDCP PDUs received by a lower layer on the basis of a PDCP Sequence Number (SN), and may include a function of sequentially transferring the reordered data to a higher layer, a function of directly transmitting the recorded data without considering the order, a function of recording PDCP PDUs lost due to the reordering, a function of reporting statuses of the lost PDCP PDUs to a transmitting side, or a function of making a request for retransmitting the lost PDCP PDUs. The main functions of the NR RLC 410, 435 may include some of the following functions.
- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation, and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

The sequential delivery function (In-sequence delivery) of the NR RLC device is a function of sequentially transferring RLC SDUs received from a lower layer to a higher layer, and may include a function of reassembling and transmitting the RLC SDUs in case that one original RLC SDU is divided into a plurality of RLC SDUs and then received, a function of reordering the received RLC PDUs on the basis of an RLC Sequence Number (SN) or a PDCP SN, a function of recording RLC PDUs lost due to the reordering, a function of reporting statuses of the lost RLC PDUs to a transmitting side, a function of making a request for retransmitting the lost RLC PDUs, a function of sequentially transferring only RLC SDUs preceding a lost RLC SDU to the higher layer in case that there is the lost RLC SDU, a function of, if a predetermined timer expires even though there is a lost RLC SDU, sequentially transferring all RLC SDUs received before the timer starts to the higher layer, or a function of, if a predetermined timer expires even though there is a lost RLC SDU, sequentially transferring all RLC SDUs received up to that point in time to the higher layer. Further, the NR RLC device may process the RLC PDUs sequentially in a reception order thereof (according to an arrival order regardless of a serial number or a sequence number) and may transfer the RLC PDUs to the PDCP device regardless of the sequence thereof (out-of- sequence delivery). In the case of segments, the NR RLC device may receive segments which are stored in the buffer or will be received in the future, reconstitute the segments to be one RLC PDU, process the RLC PDU, and then transmit the same to the PDCP device. The NR RLC layer may not include a concatenation function, and the function may be performed by the NR MAC layer, or may be replaced with a multiplexing function of the NR MAC layer.

The non-sequential delivery function (Out-of-sequence delivery) of the NR RLC device is a function of transferring RLC SDUs received from a lower layer directly to a higher layer regardless of the sequence of the RLC SDUs, and may include a function of reassembling and transmitting the RLC PDUs in case that one original RLC SDU is divided into a plurality of RLC SDUs and then received and a function of storing RLC SNs or PDCP SNs of the received RLC PDUs, reordering the RLC PDUs, and recording lost RLC PDUs.

The NR MAC 415, 430 may be connected to a plurality of NR RLC layer devices constituted in one terminal, and the main functions of the NR MAC may include some of the following functions.
- Mapping function (Mapping between logical channels and transport channels)
- Multiplexing and demultiplexing function (Multiplexing/demultiplexing of MAC SDUs)
- Scheduling information report function (Scheduling information reporting)
- HARQ function (Error correction through HARQ)
- Logical channel priority control function (Priority handling between logical channels of one UE)
- Terminal priority control function (Priority handling between LTEs by means of dynamic scheduling)
- MBMS service identification function (MBMS service identification)
- Transport format selection function (Transport format selection)
- Padding function (Padding)

The NR PHY layer 420, 425 performs an operation for channel-coding and modulating higher-layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

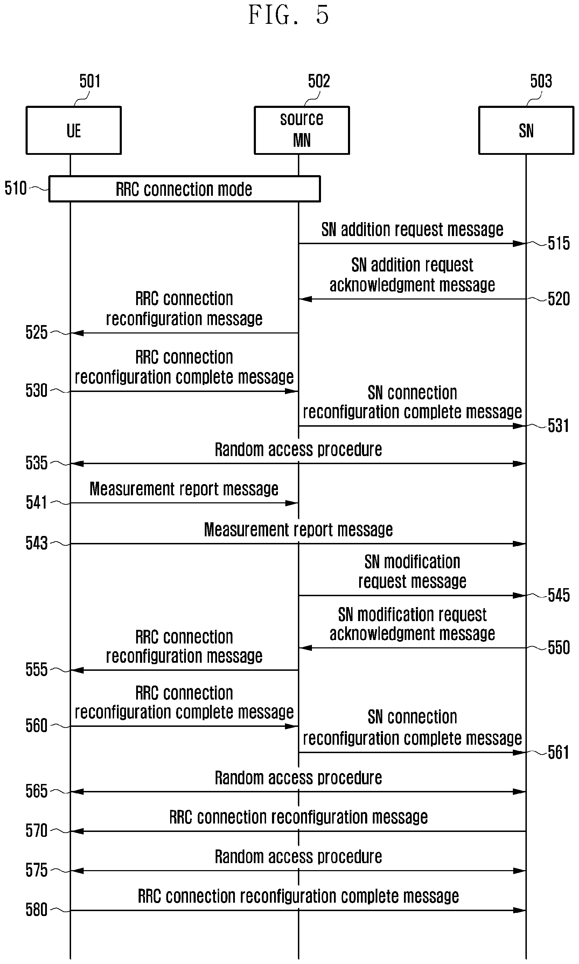

FIG. 5 is a diagram illustrating an overall flowchart of a case in which a (NG)EN-DC configured LTE performs intra-SN PSCell change according to an embodiment of the present invention.

With reference to FIG. 5, a UE 501 may be in an RRC connected mode (RRC_CONNECTED) by configuring an RRC connection with a PCell (Primary cell or SpCell of Master Node) of a source master node (MN) (510). The PCell of the source MN may refer to an LTE cell. The PCell of the source MN may be connected to a 4G core network and may be connected to a 5G core network.

In step 515, the source MN 502 may initiate an SN addition procedure to add a secondary node (SN). For example, in step 510, the source MN may transmit an SN addition request message (SgNB Addition Request or SN Addition Request) to the SN 503. The PSCell (Primary Secondary cell or SpCell of Secondary Node) of the source SN may refer to an NR cell.

In step 520, the SN 503 may transmit an SN addition request acknowledgment message (SgNB Addition Request Acknowledge or SN Addition Request Acknowledge) to the MN 502 in response to the SN addition request message. An NR RRC configuration message (e.g., RRCReconfiguration) may be incorporated in the SN addition request acknowledgment message.

In step 525, the MN 502 may transmit an RRC connection reconfiguration message (RRCConnectionReconfiguration) to the LTE 501 through SRB1. The NR RRC configuration message sent by the SN 503 in step 520 may be incorporated in the RRC connection reconfiguration message. For example, the NR RRC configuration message may include cell group configuration information for the SN (SecondaryCellGroup), radio configuration information for the SN (radiobearerConfig and/or radioBearerConfig2), measurement configuration information (measConfig), and the like.

In step 530, the UE 501 applies the RRC configuration information incorporated in the RRC connection reconfiguration message received in step 525, and may transmit an RRC connection reconfiguration complete message (RRCConnectionReconfigurationComplete) to the MN 501 through SRB1. An NR RRC Response message (e.g., RRCReconfigurationComplete) may be incorporated in the RRC connection reconfiguration complete message. That is, it may mean that the UE 501 incorporates the NR RRCReconfigurationComplete message for the SN 503 in the E-UTRA RRCConnectionReconfigurationComplete message and transmits the E-UTRA RRCConnectionReconfigurationComplete message to the MN 502. In step 531, the MN 502 may incorporate the NR RRC Response message received from the UE 502 in step 530 in the SN complete message (SgNB Reconfiguration Complete or SN Reconfiguration Complete) and transmit the SN complete message to the SN 503 in order to inform the SN 503 that the RRC reconfiguration procedure for the SN has been completed.

In step 535, in case that in the RRC connection reconfiguration message received in step 525, reconfigurationWithSync is included in spCellConfig for SN or secondary cell group (SCG), the LTE 502 may initiate a random access procedure for the PSCell in the RRC layer. For reference, steps 530 and 531 may be changed from the order of step 535. That is, the UE 501 may transmit the RRC connection reconfiguration complete message to the MN 502 after initiating or successfully completing the random access procedure for the PSCell.

In step 540, the (NG)EN-DC configured UE 501 may perform measurement based on the measurement configuration information incorporated in the RRC connection reconfiguration message received in step 525. Based on the measurement result, a measurement report message (MeasurementReport) may be transmitted to the MN 502 (541) or transmitted to the SN 503 (543). Specifically, in case that SRB3 is configured, the (NG)EN-DC configured UE 501 may transmit a measurement report message to the SN 503 through SRB3, and in case that SRB3 is not configured, the (NG)EN-DC configured LTE 501 may transmit a measurement result report message to the MN 501 through SRB1.

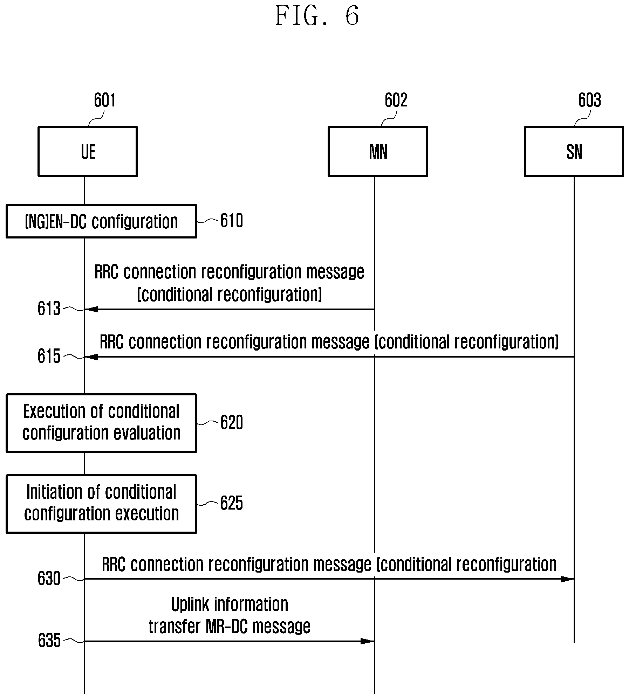

Intra-SN PSCell change (or SN modification) may be indicated by the MN 502 transmitting an E-UTRA RRC connection reconfiguration message (RRCConnectionReconfiguration) to the LTE 501 through SRB1, and may be indicated by the SN 503 transmitting NR RRC connection reconfiguration message (RRCReconfiguration) to the terminal 501 through SRB3. In case that the MN 502 instructs the intra-SN PSCell change by transmitting an E-UTRA RRC connection reconfiguration message (RRCConnectionReconfiguration) to the LTE 501 through SRB1, the MN 502 may initiate the intra-SN PScell change procedure through the measurement report message received from the UE 501 in step 541. That is, the MN 502 may transmit an SN modification request message (SgNB Modification Request or SN Modification Request) to the SN 503 (545). The SN 503 may transmit an SN modification request acknowledgment message (SgNB Modification Request Acknowledge or SN Modification Request Acknowledge) to the MN 502 in response to the SN modification request message (550). An NR RRC configuration message (e.g., RRCReconfiguration) may be incorporated in the SN modification request acknowledgment message. In step 555, the MN 502 may transmit an RRC connection reconfiguration message (RRCConnectionReconfiguration) to the UE 501 through SRB1. The RRC connection reconfiguration message may include the NR RRC configuration message transmitted by the SN 503 in step 550. For example, the NR RRC configuration message may include cell group configuration information for the SN (SecondaryCellGroup), radio configuration information for the SN (radiobearerConfig and/or radioBearerConfig2), measurement configuration information (measConfig), and the like. Steps 555, 560, 561, and 565 are the same as the previous procedure (steps 525, 530, 531, and 535). In case that the SN 503 transmits the NR RRC connection reconfiguration message (RRCReconfiguration) to the UE 501 through SRB3 to instruct the intra-SN PSCell change, the SN 503 may initiate the procedure of intra-SN PSCell change through the measurement report message received from the UE 501 in step 543. That is, the SN 503 may transmit an RRC connection reconfiguration message to the UE 501 (570). In step 575, in case that in the RRC connection reconfiguration message received in step 570, reconfigurationWithSync is included in spCellConfig for SN or secondary cell group (SCG), the UE 502 may initiate a random access procedure for the PSCell in the RRC layer. After the random access procedure for the PSCell is successful, the UE 501 may transmit an RRC connection reconfiguration complete message (RRCReconfigurationComplete) to the SN 503 to inform the SN 503 that the RRC reconfiguration procedure is complete (580). The (NG)EN-DC configured UE 501 transmits an RRC connection reconfiguration complete message to MN 502 through SRB1 in case that there is an instruction for the intra-SN PSCell change through SRB1, and the (NG)EN-DC configured LTE 501 transmits the RRC connection reconfiguration complete message to the SN 503 through SRB3 in case that there is an instruction for the intra-SN PSCell change through SRB3. FIG. 6 is a diagram illustrating an overall flowchart for a case in which a (NG)EN-DC configured UE performs Conditional intra-SN PSCell change according to an embodiment of the present invention. With reference to FIG. 6, a LTE 601 may be configured with dual access through an MN 602 and an SN 603 (610). The (NG) EN-DC configured UE 601 may receive an RRC connection reconfiguration message including a conditional reconfiguration field (ConditionalReconfiguration) from the base station. In case that SRB3 is not configured, the MN 602 may transmit an E-UTRA RRC connection reconfiguration message (RRCConnectionReconfiguration) including the conditional reconfiguration field to the UE 601 (613). In case that SRB3 is configured, the SN 603 may transmit an NR RRC connection reconfiguration message (RRCReconfiguration) including the conditional reconfiguration field to the LTE 601 (615). The conditional reconfiguration field may include at least one of the following parameters.
- List to add or modify conditional reconfiguration (CondConfigToAddModList)Conditional configuration identifier (condConfigId): Up to 8 identifiers may be configured, and each identifier may represent a candidate target SPCell.
- Conditional execution condition (conExecutionConfig): Up to 2 measurement identifiers (MeasId) may be configured for each candidate target SPCell. Each measurement identifier may be mapped with conditional triggering configuration information (CondTriggerConfig).
- Conditional RRC reconfiguration information (condRRCReconfig): An RRC connection reconfiguration message for each candidate target SPCell may be included. The RRC connection reconfiguration message may include a ReconfigurationWithSync field.
- List to remove conditional reconfiguration (CondConfigToRemoveList)
- One or a plurality of conditional configuration identifiers (CondConfigId) to be deleted may be included.

In step 620, the (NG) EN-DC configured UE 601 may apply a conditional reconfiguration field and execute conditional configuration evaluation (Conditional (re)configuration evaluation). Specifically, for each conditional configuration identifier included in a conditional configuration variable (VarConditionalConfig), the following may be executed.
- For a cell having the same physical cell identity as the value indicated in the ServingCellConfigCommon included in the reconfigurationWithSync incorporated in the received ConRRCReconfig, it may be determined as a conditional configuration evaluation applicable cell (consider the cell which has a physical cell identity matching the value indicated in the ServingCellConfigCommon included in the reconfigurationWithSync in the received condRRCReconfig to be applicable cell).
- For each measurement identifier included in the measurement identifier list within conditional measurement configuration information variable (VarMeasConfig) indicated in the conditional execution condition associated to the conditional configuration identifier (for each *measId* included in the *measIdList* within *VarMeasConfig* indicated in the *condExecutionCond* associated to *condConfigld),* in case that the following entry condition is fulfilled, it may be determined that the event associated to the corresponding measurement identifier is fulfilled, and in case that the following leaving condition is fulfilled, it may be determined that the event associated to the corresponding measurement identifier is not fulfilled.
- Entry condition: if the entry condition(s) applicable for this event associated with the condConfigId, i.e. the event corresponding with the condEventId(s) of the corresponding condTriggerConfig within VarConditionalConfig, is fulfilled for the applicable cells for all measurements after layer 3 filtering taken during the corresponding timeToTrigger defined for this event within the VarConditionalConfig:
- Leaving condition: if the leaving condition(s) applicable for this event associated with the *condConfigld,* i.e. the event corresponding with the *condEventId(s)* of the corresponding *condTriggerConfig* within *VarConditionalConfig,* is fulfilled for the applicable cells for all measurements after layer 3 filtering taken during the corresponding *timeToTrigger* defined for this event within the *VarConditionalConfig*
- In case that triggering conditions for all measurement identifiers in the conditional triggering configuration information are fulfilled for the measurement identifier in the conditional triggering configuration information (if trigger conditions for all associated *measld(s)* within *condTriggerConfig* are fulfilled for all associated *measld(s)* in *condTriggerConfig*), the UE may determine a target candidate cell in the conditional RRC reconfiguration information associated to the conditional configuration identifier as a triggered cell (consider the target candidate cell within the stored *condRRCReconfig,* associated to that *condConfigld,* as a triggered cell).

In step 625, the (NG)EN-DC configured LTE 601 may initiate conditional configuration execution in case that there is a triggered cell in step 620. Specifically, in case that one or more triggered cells exist, one cell may be selected from among the plurality of triggered cells to initiate conditional configuration execution. In addition, the conditional RRC reconfiguration information stored for the selected cell may be applied.

After setting the field or parameters included in the NR RRC connection configuration complete message, in case that Reconfiguration With Sync is applied by conditional configuration execution and ReconfigurationWithSync is included in secondaryCellGroupConfig, the (NG) EN-DC configured UE 601 may execute the followings.
- The (NG) EN-DC configured UE 601 may submit a RRC configuration complete message (RRCReconfigurationComplete) to the SN 603 through SRB3 in case that SRB3 is configured or is available. That is, the UE may transmit the RRC configuration complete message to the SN 603 after the random access procedure for the PScell is successful (630).
- In case that SRB3 is not configured or is not available, the UE may incorporate the NR RRC configuration complete message in an uplink information transfer MR-DC message (ULInformationTransferMRDC) that is an E-UTRA RRC message and submit the NR RRC configuration complete message (submit the RRCReconfigurationComplete via E-UTRA embedded in E-UTRA RRC message ULInformationTransferMRDC). In addition, the UE may initiate a random access procedure for the PSCell in the RRC layer. After the random access procedure for the PSCell is successfully completed, the UE may finally transmit the uplink information transfer MR-DC message to the MN 602 (635). Alternatively, the UE may successfully execute the random access procedure for the PSCell after transmitting the uplink information transfer MR-DC message to the MN 602.

Even if the (NG)EN-DC configured UE according to an embodiment of the present invention receives the RRC connection reconfiguration message including the conditional reconfiguration field (ConditionalReconfiguration) through SRB1, the UE may not submit the NR RRC connection configuration message through SRB1. That is, the UE may submit the NR RRC connection configuration message through SRB3 in case that SRB3 is configured or is available after the conditional configuration execution is initiated. Alternatively, even if the UE receives the RRC connection reconfiguration message including the conditional reconfiguration field (ConditionalReconfiguration) through SRB3, the UE may not submit the NR RRC connection configuration message through SRB3. That is, in case that SRB3 is not configured or is not available after the conditional configuration execution is initiated, the UE may submit the NR RRC connection configuration message through SRB1.

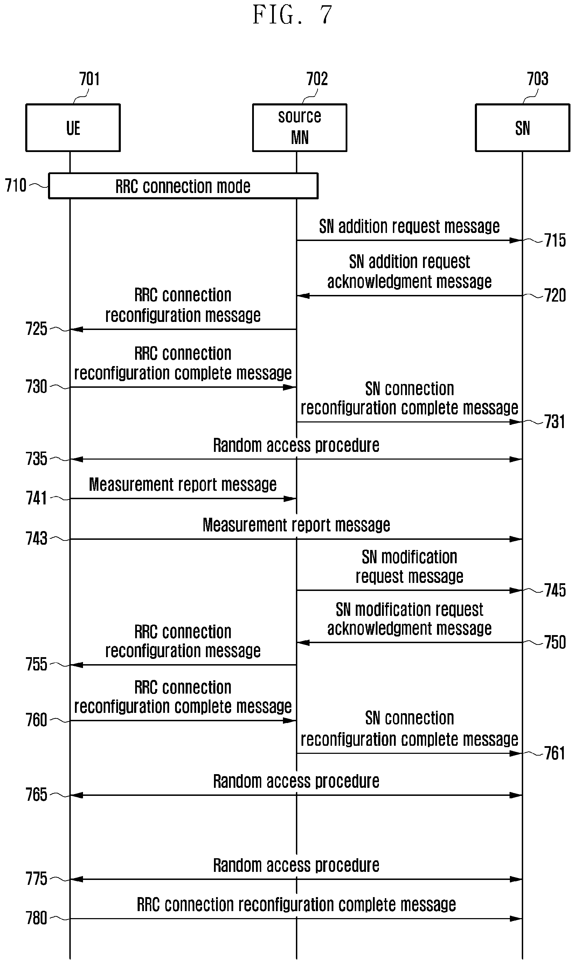

FIG. 7 is a diagram illustrating an overall flowchart of a case in which an NR-DC configured LTE performs intra-SN PSCell change according to an embodiment of the present invention. With reference to FIG. 7, a UE 701 may be in an RRC connected mode (RRC_CONNECTED) by configuring an RRC connection with a PCell (Primary cell or SpCell of Master Node) of a source mater node (MN) (710). The PCell of the source MN may refer to an NR cell. The PCell of the source MN may be connected to a 5G core network.

In step 715, the source MN 702 may initiate an SN addition procedure to add a secondary node (SN). For example, in step 710, the source MN may transmit an SN addition request message to the SN 703. A PSCell (Primary Secondary cell or SpCell of Secondary Node) of the source SN may refer to an NR cell.

In step 720, the SN 703 may transmit an SN addition request acknowledgment message to the MN 702 in response to the SN addition request message. An NR RRC configuration message (e.g., RRCReconfiguration) for the SN may be incorporated in the SN addition request acknowledgment message.

In step 725, the MN 702 may transmit an RRC connection reconfiguration message (RRCReconfiguration) to the LTE 701 through SRB1. The RRC connection reconfiguration message may include the NR RRC configuration message transmitted by the SN 703 in step 720. For example, the NR RRC configuration message may include cell group configuration information for the SN (SecondaryCellGroup or mr-dcSecondaryCellGroup), radio configuration information for the SN (radiobearerConfig and/or radioBearerConfig2), measurement configuration information (measConfig), and the like.

In step 730, the UE 701 applies the RRC configuration information incorporated in the RRC connection reconfiguration message received in step 725, and may transmit an RRC connection reconfiguration complete message (RRCReconfigurationComplete) to the MN 701 through SRB1. The RRC connection reconfiguration complete message may include an NR RRC Response message for the SN (e.g., RRCReconfigurationComplete). That is, it may mean that the UE 701 incorporates the NR RRCReconfigurationComplete message for the SN 703 in the NR RRCReconfigurationComplete message of the MN 702 and transmits the NR RRCReconfigurationComplete message to the MN 702. In step 731, the MN 702 may incorporate the NR RRC Response message received from the UE 702 in step 730 in the SN complete message (SN Reconfiguration Complete) and transmit the NR RRC Response message to SN 703, in order to inform the SN 703 that the RRC reconfiguration procedure for the SN has been completed.

In step 735, in case that, in the RRC connection reconfiguration message received in step 725, reconfigurationWithSync is included in spCellConfig for SN or a secondary cell group (SCG), the LTE 702 may initiate a random access procedure for the PSCell in the RRC layer. For reference, steps 730 and 731 may be changed from the order of step 735. That is, the UE 701 may transmit the RRC connection reconfiguration complete message to the MN 702 after initiating or successful completion of the random access procedure for the PSCell.

In step 740, the NR-DC configured UE 701 may execute measurement based on the measurement configuration information incorporated in the RRC connection reconfiguration message received in step 725. Based on the measurement result, a measurement report message (MeasurementReport) may be transmitted to the MN 702 (741) or transmitted to the SN 703 (743). Specifically, in case that SRB3 is configured, the NR-DC configured UE 701 may transmit a measurement report message to the SN 703 through SRB3, and in case that SRB3 is not configured, the NR-DC configured LTE 701 may transmit the measurement result report message to the MN 701 through SRB1.

The Intra-SN PSCell change (or SN modification) may be indicated by the MN 702 transmitting the RRC connection reconfiguration message (RRCReconfiguration) to the LTE 701 through SRB1, and may be indicated by the SN 703 transmitting the RRC connection reconfiguration message (RRCReconfiguration) to the LTE 701 through SRB3.

In case that the MN 702 instructs the intra-SN PSCell change by transmitting the RRC connection reconfiguration message (RRCReconfiguration) to the UE 701 through SRB1, the MN 702 may initiate the intra-SN PScell change procedure through the measurement report message received from the UE 701 in step 741. That is, the MN 702 may transmit an SN modification request message to the SN 703 (745). The SN 703 may transmit an SN modification request acknowledgment message to the MN 702 in response the SN modification request message (750). An NR RRC configuration message (e.g., RRCReconfiguration) for the SN may be incorporated in the SN modification request acknowledgment message. In step 755, the MN 702 may transmit an RRC connection reconfiguration message (RRCReconfiguration) to the UE 701 through SRB1. The RRC connection reconfiguration message may include the NR RRC configuration message transmitted by the SN 703 in step 750. For example, the NR RRC configuration message may include cell group configuration information for the SN (SecondaryCellGroup or mrdc-SecondaryCellGroup), radio configuration information for the SN (radiobearerConfig and/or radioBearerConfig2), measurement configuration information (measConfig), and the like. Steps 755, 760, 761, and 765 are the same as the previous procedure (steps 725, 730, 731, and 735).

In case that the SN 703 transmits the NR RRC connection reconfiguration message (RRCReconfiguration) to the UE 701 through SRB3 to instruct intra-SN PSCell change, the SN 703 may initiate the intra-SN PScell change procedure through the measurement report message received from the LTE 701 in step 743. That is, the SN 703 may transmit the RRC connection reconfiguration message to the LTE 701 (770). In step 775, in case that in the RRC connection reconfiguration message received in step 770, reconfigurationWithSync is included in spCellConfig for SN or secondary cell group (SCG), the UE 702 may initiate a random access procedure for the PSCell in the RRC layer. After the random access procedure for the PSCell is successful, the UE 701 may transmit an RRC connection reconfiguration complete message (RRCReconfigurationComplete) to the SN 703 to inform the SN 703 that the RRC reconfiguration procedure is complete (780).

In case that the NR-DC configured LTE 701 is instructed to change the intra-SN PSCell through SRB1, the UE 701 transmits an RRC connection reconfiguration complete message to the MN 702 through SRB1. In case that the LTE 701 is instructed to change the intra-SN PSCell through SRB3, the UE transmits the RRC connection reconfiguration complete message to the SN 703 through SRB3.

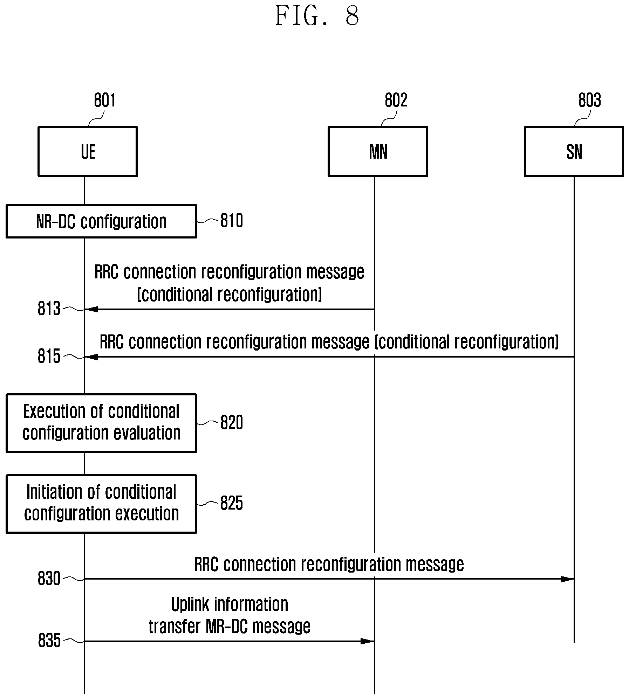

FIG. 8 is a diagram illustrating an overall flowchart of a case in which a NR-DC configured UE performs conditional intra-SN PSCell change according to an embodiment of the present invention.

With reference to FIG. 8, a LTE 801 may be configured with dual access through an MN 802 and an SN 803 (810).

The LTE 801 in which NR-DC is configured may receive an RRC connection reconfiguration message including a conditional reconfiguration field (ConditionalReconfiguration) from a base station. In case that SRB3 is not configured, the MN 802 may transmit the RRC connection reconfiguration message (RRCReconfiguration) including the conditional reconfiguration field to the UE 801 (813). In case that SRB3 is configured, the SN 803 may transmit the RRC connection reconfiguration message (RRCReconfiguration) including the conditional reconfiguration field to the UE 801 (815). The conditional reconfiguration field may include at least one of the following parameters.
- List to add or modify conditional reconfiguration (CondConfigToAddModList)
- Conditional configuration identifier (condConfigId): Up to 8 identifiers may be configured, and each identifier may represent a candidate target SPCell.
- Conditional execution condition (conExecutionConfig): Up to 2 measurement identifiers (MeasId) may be configured for each candidate target SPCell. Each measurement identifier may be mapped with conditional triggering configuration information (CondTriggerConfig).
- Conditional RRC reconfiguration information (condRRCReconfig): An RRC connection reconfiguration message for each candidate target SPCell may be included. The RRC connection reconfiguration message may include a ReconfigurationWithSync field.
- List to delete conditional reconfiguration (CondConfigToRemoveList)
- One or a plurality of conditional configuration identifiers (CondConfigId) to be deleted may be included.

In step 820, the LTE 801 in which NR-DC is configured may apply the conditional reconfiguration field and execute a conditional execution evaluation (conditional (re)configuration evaluation). Specifically, for each conditional configuration identifier included in the conditional configuration variable (VarConditionalConfig), the following may be executed.
- For a cell having the same physical cell identity as the value indicated in the ServingCellConfigCommon included in the reconfigurationWithSync incorporated in the received ConRRCReconfig, it may be determined as a conditional configuration evaluation applicable cell (consider the cell which has a physical cell identity matching the value indicated in the ServingCellConfigCommon included in the reconfigurationWithSync in the received condRRCReconfig to be applicable cell)
- For each measurement identifier included in the measurement identifier list within conditional measurement configuration information variable (VarMeasConfig) indicated in the conditional execution condition associated to the conditional configuration identifier (for each *measId* included in the *measIdList* within *VarMeasConfig* indicated in the *condExecutionCond* associated to *condConfigld),* in case that the following entry condition is fulfilled, it may be determined that the event associated to the corresponding measurement identifier is fulfilled, and in case that the following leaving condition is fulfilled, it may be determined that the event associated to the corresponding measurement identifier is not fulfilled.
- Entry condition: if the entry condition(s) applicable for this event associated with the condConfigId, i.e. the event corresponding with the condEventId(s) of the corresponding condTriggerConfig within VarConditionalConfig, is fulfilled for the applicable cells for all measurements after layer 3 filtering taken during the corresponding timeToTrigger defined for this event within the VarConditionalConfig:
- Leaving condition: if the leaving condition(s) applicable for this event associated with the *condConfigld,* i.e. the event corresponding with the *condEventId(s)* of the corresponding *condTriggerConfig* within *VarConditionalConfig,* is fulfilled for the applicable cells for all measurements after layer 3 filtering taken during the corresponding *timeToTrigger* defined for this event within the *VarConditionalConfig*
- In case that triggering conditions for all measurement identifiers in the conditional triggering configuration information are fulfilled for the measurement identifier in the conditional triggering configuration information (if trigger conditions for all associated *measld(s)* within *condTriggerConfig* are fulfilled for all associated *measld(s)* in *condTriggerConfig*), the UE may determine a target candidate cell in the conditional RRC reconfiguration information associated to the conditional configuration identifier as a triggered cell (consider the target candidate cell within the stored *condRRCReconfig,* associated to that *condConfigId,* as a triggered cell).

In step 825, the UE 801 in which NR-DC is configured may initiate conditional configuration execution in case that there is a triggered cell in step 820. Specifically, in case that one or more triggered cells exist, one cell may be selected from among the plurality of triggered cells to initiate conditional configuration execution. In addition, the conditional RRC reconfiguration information stored for the selected cell may be applied.

After setting the field or parameters included in the NR RRC connection configuration complete message, in case that Reconfiguration With Sync is applied by conditional configuration execution and ReconfigurationWithSync is included in secondary Cell GroupConfig, the UE 801 in which NR-DC is configured may execute the followings.
- The UE 801 in which NR-DC is configured may submit a RRC configuration complete message (RRCReconfigurationComplete) to the SN 803 through SRB3 in case that SRB3 is configured or is available. That is, the UE may transmit the RRC configuration complete message to the SN 803 after the random access procedure for the PScell is successful (830).
- In case that SRB3 is not configured or is not available, the UE may incorporate the NR RRC configuration complete message for SN in an uplink information transfer MR-DC message (ULInformationTransferMRDC) that is NR RRC message and submit the NR RRC configuration complete message (submit the RRCReconfigurationComplete via SRB1 embedded in NR RRC message ULInformationTransferMRDC). In addition, the UE may initiate a random access procedure for the PSCell in the RRC layer. After the random access procedure for the PSCell is successfully completed, the UE may finally transmit the uplink information transfer MR-DC message to the MN 802 (835). Alternatively, the UE may successfully execute the random access procedure for the PSCell after transmitting the uplink information transfer MR-DC message to the MN 802.

Even if the UE in which NR-DC is configured according to an embodiment of the present invention receives the RRC connection reconfiguration message including the conditional reconfiguration field (ConditionalReconfiguration) through SRB1, the UE may not submit the NR RRC connection configuration message through SRB1. That is, the UE may submit the NR RRC connection configuration message through SRB3 in case that SRB3 is configured or is available after the conditional configuration execution is initiated. Alternatively, even if the UE receives the RRC connection reconfiguration message including the conditional reconfiguration field (ConditionalReconfiguration) through SRB3, the UE may not submit the NR RRC connection configuration message through SRB3. That is, in case that SRB3 is not configured or is not available after the conditional configuration execution is initiated, the UE may submit the NR RRC connection configuration message through SRB1.

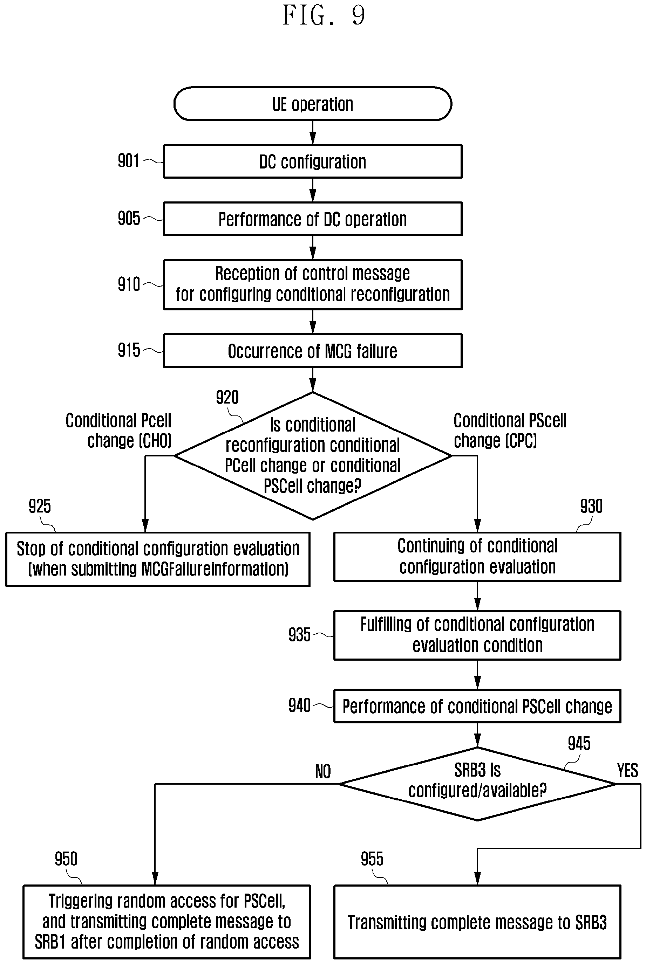

FIG. 9 is a flowchart illustrating terminal operation when a terminal in which DC is configured performs conditional handover.

With reference to FIG. 9, a LTE may be configured with DC (901). DC may refer to (NG)EN-DC or NR-DC.

In step 905, the DC-configured UE may perform DC operation. That is, data may be simultaneously transmitted and received from an MN and an SN through DC.

In step 910, the LTE may receive a control message for configuring conditional reconfiguration. That is, the UE may receive an RRC message including a conditional reconfiguration field. The conditional reconfiguration field may include configuration information for a conditional PCell change or may include configuration information for a conditional PSCell change. That is, the configuration information for the conditional PCell change and the configuration information for the conditional PSCell change may not be included at the same time. The UE may receive the control message including the conditional reconfiguration field through SRB1 or SRB3. In step 915, MCG failure may occur in the LTE. As an example, RLF for the PCell may occur, and thus MCG failure may occur.

In step 920, the UE may determine whether the conditional reconfiguration field received in step 910 is the configuration information for the conditional PCell change or the configuration information for the conditional PSCell change.

In case that the conditional reconfiguration field received in step 910 is the configuration information for the conditional PCell change, in step 925, the LTE may stop the conditional configuration evaluation. As an example, the LTE may stop the conditional configuration evaluation when the MCGFailureInformation message is submitted, or the UE may stop the conditional configuration evaluation when MCG failure occurs.

In case that the conditional reconfiguration field received in step 910 is the configuration information for the conditional PSCell change, in step 930, the LTE may continue conditional configuration evaluation. That is, it may mean that the LTE may continue the conditional configuration evaluation for the PScell change even if MCG failure occurs in case that the configuration information for the conditional PSCell change is received.

In step 935, the LTE may determine that the conditional configuration evaluation condition is fulfilled.

In step 940, the UE may perform the conditional PSCell change.

In step 945, the UE may determine whether SRB3 is configured or whether SRB3 is available. In case that SRB3 is not configured or is not available, in step 950, the LTE triggers random access for the PSCell, and after completing the random access, the UE may transmit or deliver a complete message through SRB1. This may follow the above-described embodiment.

In case that SRB3 is configured or is available, in step 955, the UE may transmit a complete message through SRB3.

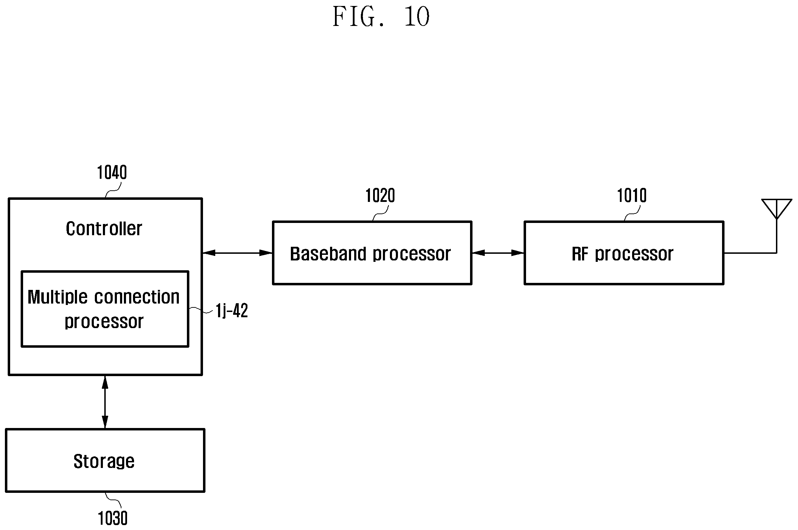

FIG. 10 is a block diagram illustrating an internal structure of a terminal to which the present invention is applied.

With reference to FIG. 10, a terminal includes a radio frequency (RF) processor 1010, a baseband processor 1020, a storage 1030, and a controller 1040.

The RF processor 1010 performs a function for transmitting and receiving a signal on a radio channel, such as signal band conversion and amplification. That is, the RF processor 1010 performs up-conversion of a baseband signal provided from the baseband processor 1020 into an RF-band signal to transmit the converted signal through an antenna, and performs down-conversion of the RF-band signal received through the antenna into a baseband signal. For example, the RF processor 1010 may include a transmission filter, a reception filter, an amplifier, a mixer, an oscillator, a digital-to-analog converter (DAC), an analog-to-digital converter (ADC), and the like. Although only one antenna is illustrated in the drawing, the terminal may be provided with a plurality of antennas. Further, the RF processor 1010 may include a plurality of RF chains. Further, the RF processor 1010 may perform beamforming. For the beamforming, the RF processor 1010 may adjust phase and size of each of the signals transmitted or received through the plurality of antennas or antenna elements. Further, the RF processor 1010 may perform MIMO, and may receive several layers during performing of the MIMO operation.

The baseband processor 1020 performs a conversion function between a baseband signal and a bit string in accordance with the physical layer standard of the system. For example, during data transmission, the baseband processor 1020 generates complex symbols by encoding and modulating a transmitted bit string. Further, during data reception, the baseband processor 1020 restores a received bit string by demodulating and decoding the baseband signal provided from the RF processor 1010. For example, in case of an orthogonal frequency division multiplexing (OFDM) method, during data transmission, the baseband processor 1020 generates complex symbols by encoding and modulating a transmitted bit string, performs mapping of the complex symbols onto subcarriers, and then constitutes OFDM symbols through the inverse fast Fourier transform (IFFT) operation and cyclic prefix (CP) insertion. Further, during data reception, the baseband processor 1020 divides the baseband signal being provided from the RF processor 1010 in the unit of OFDM symbols, restores the signals mapped onto the subcarriers through the fast Fourier transform (FFT) operation, and then restores the received bit string through demodulation and decoding.

The baseband processor 1020 and the RF processor 1010 transmit and receive the signals as described above. Accordingly, the baseband processor 1020 and the RF processor 1010 may be called a transmitter, a receiver, a transceiver, or a communication unit. Further, in order to support different radio access technologies, at least one of the baseband processor 1020 and the RF processor 1010 may include a plurality of communication modules. Further, in order to process signals of different frequency bands, at least one of the baseband processor 1020 and the RF processor 1010 may include different communication modules. For example, the different radio access technologies may include a wireless LAN (e.g., IEEE 802.11), a cellular network (e.g., LTE), and the like. Further, the different frequency bands may include super high frequency (SHF) (e.g., 2.NR Hz or NR Hz) band and millimeter wave (e.g., 60 GHz) band. The storage 1030 stores therein a basic program for an operation of the terminal, application programs, and data of configuration information, etc. In particular, the storage 1030 may store information related to a second access node that performs wireless communication using a second radio access technology. Further, the storage 1030 provides stored data in accordance with a request from the controller 1040.

The controller 1040 controls the overall operation of the terminal. For example, the controller 1040 transmits and receives signals through the baseband processor 1020 and the RF processor 1010. Further, the controller 1040 records or reads data in or from the storage 1040. For this, the controller 1040 may include at least one processor. For example, the controller 1040 may include a communication processor (CP) performing a control for communication and an application processor (AP) controlling a higher layer, such as an application program.

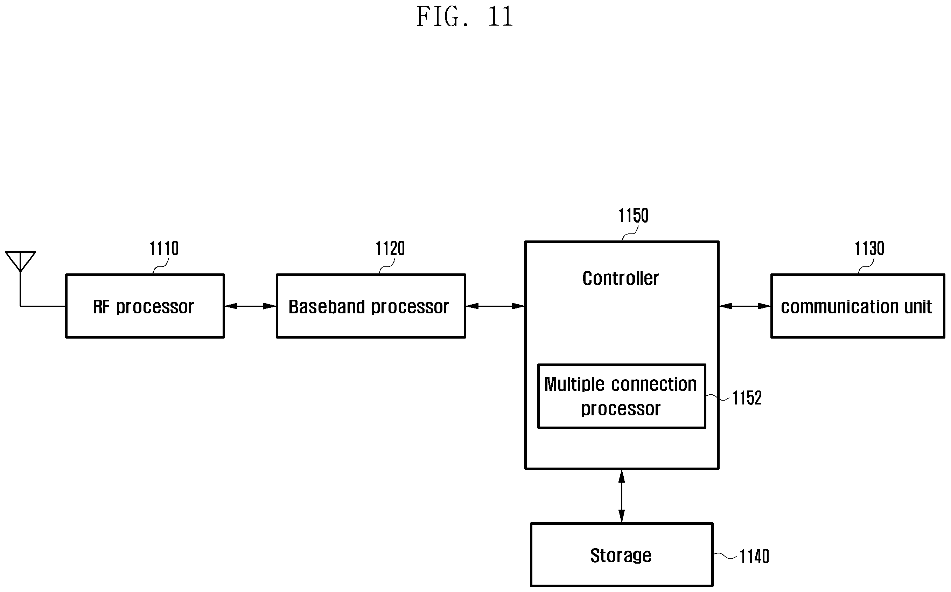

FIG. 11 is a block diagram illustrating a structure of a base station according to an embodiment of the present invention.

As illustrated in the drawing, a base station is constituted to include an RF processor 1110, a baseband processor 1120, a backhaul communication unit 1130, a storage 1140, and a controller 1150.

The RF processor 1110 performs a function for transmitting and receiving a signal on a radio channel, such as signal band conversion and amplification. That is, the RF processor 1110 performs up-conversion of a baseband signal provided from the baseband processor 1120 into an RF-band signal to transmit the converted signal through an antenna, and performs down-conversion of the RF-band signal received through the antenna into a baseband signal. For example, the RF processor 1110 may include a transmission filter, a reception filter, an amplifier, a mixer, an oscillator, a DAC, an ADC, and the like. Although only one antenna is illustrated, the first connection node may be provided with a plurality of antennas. Further, the RF processor 1110 may include a plurality of RF chains. Further, the RF processor 1110 may perform beamforming. For the beamforming, the RF processor 1110 may adjust phase and size of each of the signals transmitted or received through the plurality of antennas or antenna elements. The RF processor 1110 may perform down MIMO operation through transmission of one or more layers.

The baseband processor 1120 performs conversion function between a baseband signal and a bit string in accordance with the physical layer standard of the first radio access technology. For example, during data transmission, the baseband processor 1120 generates complex symbols by encoding and modulating a transmitted bit string. Further, during data reception, the baseband processor 1120 restores a received bit string by demodulating and decoding the baseband signal provided from the RF processor 1110. For example, in case of an OFDM method, during data transmission, the baseband processor 1120 generates complex symbols by encoding and modulating a transmitted bit string, performs mapping of the complex symbols to subcarriers, and then constitutes OFDM symbols through the IFFT operation and CP insertion. Further, during data reception, the baseband processor 1120 divides the baseband signal provided from the RF processor 1110 in the unit of OFDM symbols, restores the signals mapped to the subcarriers through the FFT operation, and then restores the received bit string through demodulation and decoding. The baseband processor 1120 and the RF processor 1110 transmit and receive the signals as described above. Accordingly, the baseband processor 1120 and the RF processor 1110 may be called a transmitter, a receiver, a transceiver, a communication unit, or a wireless communication unit.

The backhaul communication unit 1130 provides an interface for performing communication with other nodes in the network. That is, the backhaul communication unit 1130 converts a bit string being transmitted from the base station to other nodes, for example, an auxiliary base station, a core network, etc., into a physical signal, and converts the physical signal being received from other nodes into a bit string.

The storage 1140 stores therein a basic program for an operation of the base station, application programs, and data of configuration information. In particular, the storage 1140 may store information on a bearer allocated to the connected terminal, the measurement result reported from the connected terminal, and the like. Further, the storage 1140 may store information that becomes a basis of determination whether to provide or suspend a multi-connection to the terminal. Further, the storage 1140 provides stored data in accordance with a request from the controller 1150.

The controller 1150 controls the overall operation of the base station. For example, the controller 1150 transmits and receives signals through the baseband processor 1120 and the RF processor 1110 or through the backhaul communication unit 1130. Further, the controller 1150 records or reads data in or from the storage unit 1140. For this, the controller 1150 may include at least one processor.

Meanwhile, the embodiments described in the present specification and drawings are merely for easy explanation of the technical contents of the disclosure and proposal of specific examples to help understanding of the disclosure, but are not intended to limit the scope of the disclosure. That is, it will be apparent to those of ordinary skill in the art to which the disclosure pertains that other modified examples that are based on the technical idea of the disclosure can be embodied. Further, according to circumstances, the respective embodiments may be operated in combination.

## Claims

1. A communication method of a terminal in which dual connectivity (DC) is configured and performs conditional secondary node (SN) PScell change, comprising:
receiving a radio resource control (RRC) reconfiguration message including conditional reconfiguration associated information from a base station;
determining whether there is a cell fulfilling a conditional reconfiguration execution condition based on the conditional reconfiguration associated information; and
transmitting an RRC reconfiguration complete message to the base station in case that there is the cell that fulfills the conditional reconfiguration execution condition.

2. The method according to claim 1, further comprising performing a random access procedure on the cell in case that reconfigurationwithysync is included in the conditional reconfiguration associated information for the cell.

3. The method according to claim 1, wherein the base station is a master node (MN) base station in case that a signaling radio bearer (SRB3) is not configured in the terminal or communication through the SRB3 is not possible.

4. The method according to claim 1, wherein the base station is a second node (SN) base station in case that a signaling radio bearer (SRB3) is configured in the terminal.

5. The method according to claim 1, wherein the RRC reconfiguration complete message is included in an LTE RRC message in case that the DC is EN-DC, and the RRC reconfiguration complete message is included in an NR RRC message in case that the DC is NR-DC.

6. A communication method of a base station, comprising:
transmitting a radio resource control (RRC) reconfiguration message including conditional reconfiguration associated information to a terminal; and
receiving an RRC reconfiguration complete message from the terminal,
wherein it is determined whether there is a cell fulfilling a conditional reconfiguration execution condition based on the conditional reconfiguration associated information, and the RRC reconfiguration complete message is received from the terminal in case that there is the cell that fulfills the conditional reconfiguration execution condition.

7. The method according to claim 6, wherein a random access procedure on the cell is performed in case that reconfigurationwithysync is included in the conditional reconfiguration associated information for the cell.

8. The method according to claim 6, wherein the base station is a second node (SN) base station in case that a signaling radio bearer (SRB3) is configured in the terminal, and the base station is a master node (MN) base station in case that the signaling radio bearer (SRB3) is not configured or is not available in the terminal.

9. A terminal in which dual connectivity (DC) is configured and performs conditional secondary node (SN) PScell change, comprising:
a communication unit; and
a controller that receives a radio resource control (RRC) reconfiguration message including conditional reconfiguration associated information from a base station, determines whether there is a cell fulfilling a conditional reconfiguration execution condition based on the conditional reconfiguration associated information, and transmits an RRC reconfiguration complete message to the base station in case that there is the cell that fulfills the conditional reconfiguration execution condition.

10. The terminal according to claim 9, wherein the controller controls to perform a random access procedure on the cell in case that reconfigurationwithysync is included in the conditional reconfiguration associated information for the cell.

11. The terminal according to claim 9, wherein the base station is a master node (MN) base station in case that a signaling radio bearer (SRB3) is not configured in the terminal or communication through the SRB3 is not possible.

12. The terminal according to claim 9, wherein the base station is a second node (SN) base station in case that a signaling radio bearer (SRB3) is configured in the terminal.

13. The terminal according to claim 9, wherein the RRC reconfiguration complete message is included in an LTE RRC message in case that the DC is EN-DC, and the RRC reconfiguration complete message is included in an NR RRC message in case that the DC is NR-DC.

14. A base station, comprising:
a transceiver; and
a controller that transmits a radio resource control (RRC) reconfiguration message including conditional reconfiguration associated information to a terminal, and controls to receive an RRC reconfiguration complete message from the terminal,
wherein it is determined whether there is a cell fulfilling a conditional reconfiguration execution condition based on the conditional reconfiguration associated information, and the RRC reconfiguration complete message is received from the terminal in case that there is the cell that fulfills the conditional reconfiguration execution condition.

15. The base station according to claim 14, wherein a random access procedure on the cell is performed in case that reconfigurationwithysync is included in the conditional reconfiguration associated information for the cell.
